Europäisches Patentamt

European Patent Office

Office européen des brevets

(11) Veröffentlichungsnummer: **0 292 813**
**A2**

(12) **EUROPÄISCHE PATENTANMELDUNG**

(21) Anmeldenummer: **88107729.1**

(22) Anmeldetag: **13.05.88**

(51) Int. Cl.4: **B05D 1/26 , B05C 5/02**

(30) Priorität: **26.05.87 DE 3717672**

(43) Veröffentlichungstag der Anmeldung:
**30.11.88 Patentblatt 88/48**

(84) Benannte Vertragsstaaten:
**AT BE CH FR GB IT LI NL SE**

(71) Anmelder: **REICH Spezialmaschinen GmbH**
**Postfach 1803 Plochinger Strasse 65**
**D-7440 Nürtingen(DE)**

(72) Erfinder: **Heydt, Fritz, Dr.**
**Zugäckerstrasse 32**
**D-7440 Nürtingen 10(DE)**
Erfinder: **Henzler, Roland**
**Untere Wengertstrasse 21**
**D-7440 Nürtingen 8(DE)**

(74) Vertreter: **Hoeger, Stellrecht & Partner**
**Uhlandstrasse 14c**
**D-7000 Stuttgart 1(DE)**

(54) Verfahren und Vorrichtung zum Verbinden von Umleimteilen mit den Stirnseiten plattenförmiger Werkstücke.

(57) Bei einem Verfahren zum Verbinden von Umleimteilen mit den Stirnflächen plattenförmiger Werkstücke ist vorgesehen, daß die Stirnseiten und/oder die Umleimteile lediglich in einem mittleren Bereich mit einem gegen Umgebungseinflüsse relativ wenig resistenten Schmelzkleber versehen werden, während auf die Randzonen beidseits dieses mittleren Bereiches ein gegen Umgebungseinflüsse relativ stärker resistenter Kleber aufgebracht wird. Bei einer Vorrichtung zur Durchführung dieses Verfahrens ist die Auftragsbreite und die Anordnung einer ersten Düse für Schmelzkleber derart, daß der Schmelzkleberauftrag lediglich im mittleren Bereich der Stirnseite des Werkstücks oder des Umleimteils erfolgt. Eine zweite und eine dritte Düse sind bezüglich des Werkstückes und/oder Umleimteils so ausgebildet und angeordnet, daß der Auftrag des relativ stärker resistenten Klebers nur in den Randzonen beidseits des mittleren, mit Schmelzkleber versehenen Bereiches erfolgt.

FIG. 1

## Verfahren und Vorrichtung zum Verbinden von Umleimteilen mit den Stirnseiten plattenförmiger Werkstücke

Die Erfindung betrifft in erster Linie ein Verfahren zum Verbinden von Umleimteilen mit den Stirnseiten plattenförmiger Werkstucke, bei dem die Stirnseite des Werkstückes und/oder der Umleimteil mit flüssigem Klebstoff beschichtet, Stirnseite und Umleimteil aneinander angelegt und miteinander verpreßt werden. Außerdem bezieht sich die Erfindung auf eine Vorrichtung zur Durchführung eines solchen Verfahrens mit einer ersten Düse zum Auftragen eines Schmelzklebers auf die Stirnseite des Werkstückes und/oder den Umleimteil.

Es ist bekannt, die Stirnseiten plattenförmiger Werkstücke, beispielsweise Spanplatten mit Umleimteilen, gewöhnlich "Kanten" genannt, zu verbinden. Solche Umleimteile können beispielsweise in Form von Kunststoff- oder Furnierstreifen, aber auch in Form von Holzleisten vorliegen.

Bei den bekannten Verfahren zum Verbinden von Umleimteilen mit den Stirnseiten der plattenförmigen Werkstücke wird die Stirnseite über ihre ganze Breite hinweg mit einem flüssigen Schmelzkleber auf Polyäthylenvinylazetat-Basis beschichtet und das Umleimteil an diese beschichtete Stirnseite aufgepreßt. Die bekannten Schmelzkleber dieser Art haben den Nachteil, daß sie bei bestimmten Umgebungseinflüssen, insbesondere Feuchtigkeit und höherer Temperatur ihre Klebkraft verlieren. Infolgedessen haben die Umleimteile die Tendenz, sich bei bestimmten Umgebungsbedingungen an ihren Kanten von den Stirnseiten des Werkstücks abzulösen, was in der Praxis ein höchst unerwünschtes Phänomen ist.

Es sind zwar bereits gegen Umwelteinflüsse, also insbesondere gegen Feuchtigkeit und höhere Temperatur relativ stärker resistente Kleber bekannt,diese sind jedoch um eine Vielfaches teurer als die üblichen Schmelzkleber und haben weiterhin eine verhältnismäßig lange Abbindzeit, die besondere Vorkehrungen erforderlich macht, um ein Wiederablösen der Umleimteile unmittelbar nach ihrem Anlegen an die Stirnseite des Werkstückes zu verhindern.

Es ist Aufgabe der Erfindung, das gattungsgemäße Verfahren zum Verbinden von Umleimteilen mit den Stirnseiten plattenförmiger Werkstücke so zu verbessern, daß einerseits ein Ablösen der Umleimteile in ihren Kantenbereichen von den plattenförmigen Werkstücken bei Feuchtigkeit und höherer Temperatur und andererseits ein Wiederablösen der Umleimteile unmittelbar nach ihrem Anlegen an die Werkstücke verhindert ist.

Die Aufgabe wird bei einem gattungsgemäßen Verfahren dadurch gelöst, daß die Stirnseite des Werkstückes und/oder der Umleimteil lediglich in einem mittleren Bereich mit einem gegen Umgebungseinflüsse relativ wenig resistenten Schmelzkleber und die Randzonen beidseits des mittleren Bereichs mit einem gegen Umgebungseinflüsse relativ stärker resistenten Kleber beschichtet werden.

Eine Vorrichtung zur Durchführung dieses Verfahrens mit einer ersten Düse zum Auftragen eines Schmelzklebers zeichnet sich dadurch aus, daß die Auftragsbreite und die Anordnung der ersten Düse bezüglich der Stirnseite des Werkstückes und/oder des Umleimteils derart ist, daß der Schmelzkleberauftrag lediglich in einem mittleren Bereich der Stirnseite erfolgt, und eine zweite und eine dritte Düse vorgesehen sind, die bezüglich des Werkstückes und/oder Umleimteils so ausgebildet und angeordnet sind, daß der Auftrag des relativ stärker resistenten Klebers nur in den Randzonen beidseits des mittleren Bereiches erfolgt.

Die nachstehende Beschreibung einer bevorzugten Ausführungsform der Erfindung dient im Zusammenhang mit beiliegender Zeichnung der weiteren Erläuterung. Es zeigen:

Fig. 1 schematisch die Anordnung mehrerer Düsen zum Beschichten der Stirnseite eines Werkstückes mit Klebstoff;

Fig. 2 eine teilweise geschnittene Ansicht zweier Auftragdüsen für Polyurethan-Kleber und

Fig. 3 eine Schnittansicht der Düse im Bereich A der Fig. 2.

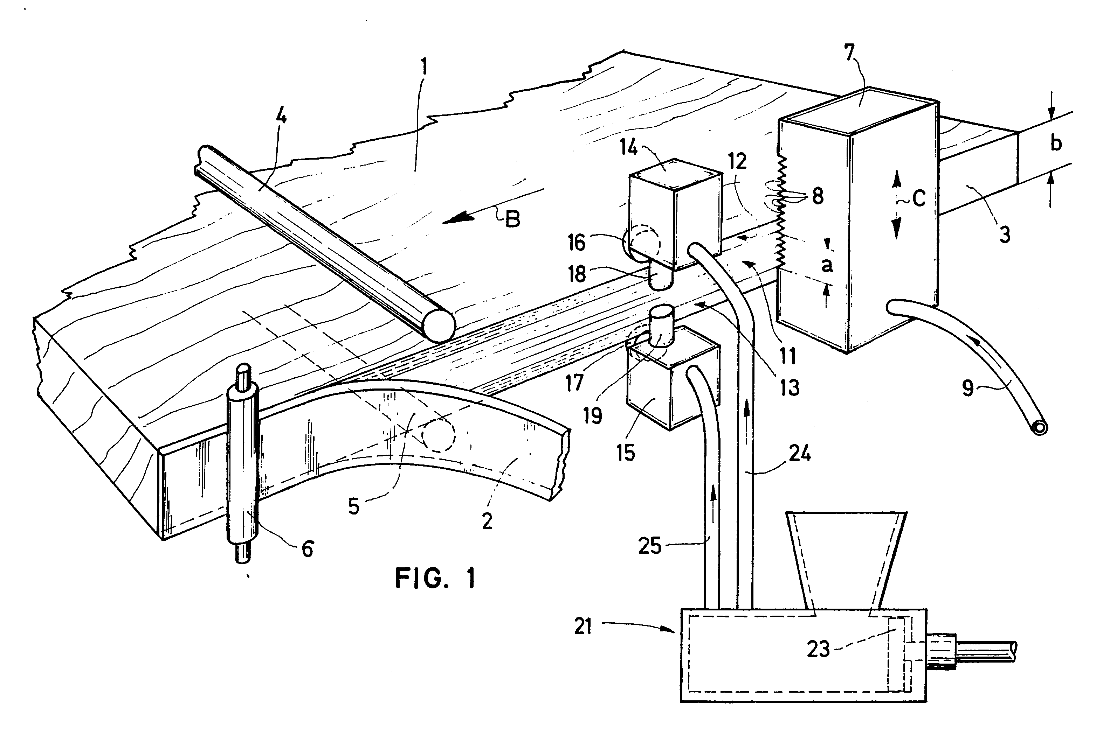

Die Fig. 1 zeigt schematisch eine Leimstation, an welcher an ein in Richtung des Pfeiles B vorgeschobenes Werkstück 1, beispielsweise ein Brett oder eine Spannplatte ein Umleimteil 2, beispielsweise in Gestalt eines Kunststoffstreifens angeklebt werden soll. Die Anklebung erfolgt an eine Schmaloder Stirnseite 3 des Werkstücks 1. Rollen 4, 5 oder andere Fördereinrichtungen dienen dem Vorschub des Werkstückes 1. Eine Anpreßwalze 6 preßt den Umleimteil 2 an die Stirnseite 3 an.

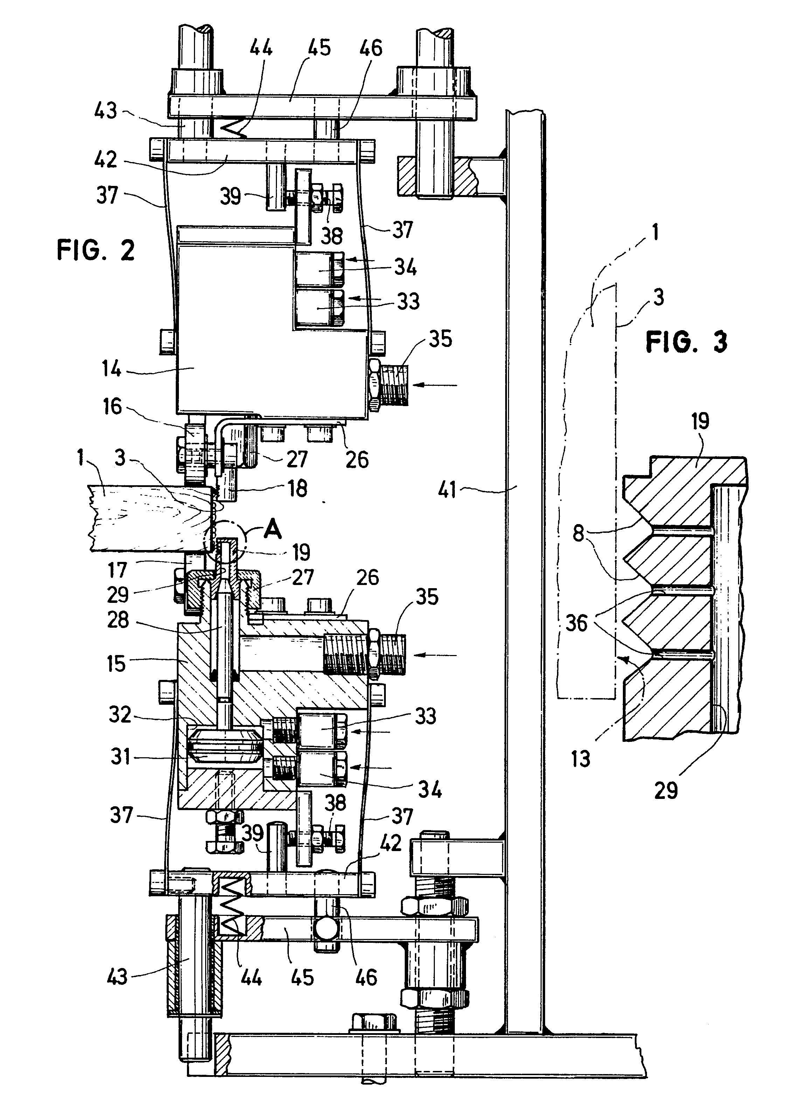

Eine erste, in Richtung des Pfeiles C höhenverstellbare Düse 7 weist an ihrer der Stirnseite 3 zugekehrten Fläche in Vorschubrichtung B verlaufende Nuten 8 auf, in deren Nutgrund jeweils Austrittsöffnungen für einen heißflüssigen Schmelzkleber vorgesehen sind. Die Profilform der Nuten und Austrittsöffnungen entspricht der in Fig. 3 dargestellten Ausführungsform einer anderen, später noch zu beschreibenden Düse. Über eine Leitung 9 wird der ersten Düse 7 ein heißer Schmelzkleber zugeführt. Mit Hilfe einer an sich bekannten und daher nicht dargestellten Einrichtung können die Klebeaustrittsöffnungen in den Nuten 8 von oben her versperrt werden, so daß der Schmelzkleber lediglich über die in Fig. 1 mit a bezeichnete Breite austritt. Durch entsprechende Höheneinstellung der Düse 7 in Richtung des Doppelpfeils C kann - schließlich der Bereich, an dem aus der Düse 7 Schmelzkleber austritt, so positioniert werden, daß ein Schmelzkleberauftrag auf die Stirnseite 3 lediglich in einem mittleren Bereich 11 mit der Breite a erfolgt. Die Breite der Stirnseite 3 selbst ist größer als die Breite dieses Klebeauftrags und in Fig. 1 mit b bezeichnet. Beidseits des mittleren, mit Schmelzkleber versehenen Bereiches 11 bleiben - schmale Randzonen 12, 13 frei von Schmelzkleber.

In Vorlaufrichtung hinter der ersten Düse 7 sind eine zweite und dritte Düse 14, 15 angeordnet und mit Rollen 16 bzw. 17 an Ober- bzw. Unterseite des vorlaufenden Werkstücks 1 abgestützt. Beide Düsen 14, 15 weisen nach unten bzw. nach oben gekehrte Ansätze 18 bzw. 19 auf. Aus diesen Ansätzen 18, 19 tritt ein gegenüber dem aus der Düse 7 zugeführten Schmelzkleber stärker resistenter Kleber aus, vorzugsweise ein Kleber auf PolyurethanBasis. Die Düsen 14, 15 mit ihren Ansätzen 18, 19 sind so ausgebildet und angeordnet, daß ein Kleberauftrag lediglich in die Randzonen 12, 13 beidseits des Schmelzkleberauftrags in der Mittelzone 11 erfolgt. Die Breite der mit Polyurethan-Kleber oder dergleichen versehenen Randzonen kann beispielsweise etwa 3 bis 5 mm betragen. Der Rest der Stirnseitenbreite des Werkstücks 1 wird von dem mit Schmelzkleber bedeckten Mittelbereich 11 eingenommen. Je nach der Stärke b des Werkstückes 1 wird die Breite a des mittleren Bereiches 11 für den Schmelzkleberauftrag eingestellt, und zwar durch Einstellung der Düse 7 in Richtung des Doppelpfeiles C und Öffnen oder Verschließen von Kleberaustrittsöffnungen im Nutgrund der Nuten 8. Die Auftragsbreite des aus den Düsen 14, 15 ausströmenden Polyurethan-Klebers ist hingegen vorzugsweise konstant gewählt.

Der kalte Polyurethan-Kleber wird in eine Heizeinrichtung 21 eingegeben, vorzugsweise in Granulatform, wobei das Granulat in einen mit der Einrichtung 21 verbundenen Trichter geschüttet wird. Nach Aufheizung wird durch Vorschieben eines Kolbens 23 der heißflüssige PolyurethanKleber über Leitungen 24, 25 den Düsen 14 bzw. 15 zugeleitet.

Nach dem Auftrag des Schmelzklebers im mittleren Bereich 11 und des Polyurethan-Klebers in den Randzonen 12, 13 wird der Umleimteil 2 kontinuierlich zugeführt und durch die Walze 6 angepreßt.

Da der aus der Düse 7 aufgetragene Schmelzkleber verhältnismäßig rasch abbindet, wird hierdurch dem Umleimteil 2 bereits unmittelbar nach dem Anlegen an die Stirnseite 3 ein verhältnismäßig fester Halt gegeben. Dementsprechend braucht der in den Randzonen 12, 13 aufgetragene Polyurethan-Kleber weniger rasch abzubinden. Dieser Kleber hat jedoch im Gegensatz zum Schmelzkleber die Eigenschaft, gegenüber Umwelteinflüssen, insbesondere Feuchtigkeit und höherer Temperatur hochresistent zu sein. Daher ist der Umleimteil 2 durch diesen Kleber im Kantenbereich besonders innig mit dem Werkstück 1 verbunden und kann sich somit bei Feuchtigkeit oder höherer Temperatur nicht ablösen.

Da gleichzeitig nur eine verhältnismäßig kleine Menge an Polyurethan-Kleber in die Randzonen 12, 13 aufgebracht werden muß, ist auch den hohen Kosten dieses Klebers Rechnung getragen, da der mittlere Bereich 11 der Stirnseite 3 des Werkstückes 1 lediglich mit dem preiswerten Schmelzkleber beschichtet zu werden braucht.

Bei der Ausführungsform gemäß Fig. 1 erfolgt der Auftrag des Polyurethan-Klebers nach dem Schmelzkleberauftrag. Prinzipiell ist auch ein gleichzeitiger Auftrag der einzelnen Klebersorten nebeneinander möglich. Weiterhin wird in Fig. 1 das Werkstück 1 vorgeschoben, während die Düsen 7, 14 und 15 stationär sind. Bei einer anderen Ausführungsform könnten diese Düsen auch prinzipiell an der Stirnseite 3 eines ortsfest gehaltenen Werkstückes 1 entlanggeführt werden. Schließlich ist es auch möglich, den Kleberauftrag aus den Düsen 7, 14, 15 statt auf die Stirnseite 3 des Werkstückes 1 auf die dieser Stirnseite zugekehrte Innenfläche des Umleimteils 2 vorzunehmen oder den Klebstoff auch sowohl auf die Stirnseite 3 als auch auf den Umleimteil 2 aufzubringen. Auch ein Auftragen der einen Klebstoffsorte, z.B. des Schmelzklebers auf die Stirnseite 3 des Werkstückes 1 und der anderen Klebstoffsorte, z.B. des Polyurethan-Klebers auf entsprechende Randzonen des Umleimteils 2 ist möglich.

In Fig. 2 und 3 ist eine konstruktive Ausführung der zweiten und dritten Düsen 14, 15 und ihrer Halterung dargestellt.

Da die obere Düse 14 der unteren Düse 15 genau entspricht, wird im folgenden nur diese untere Düse 15 beschrieben.

Die bereits erwähnte Rolle 17 ist mittels eines Halters 26 an der Düse 15 gehalten (vgl. auch die Rolle 16 und ihren Halter 26 an der Düse 14). Der Ansatz 19 ist mittels einer Überwurfmutter 27 an der Düse 15 gehalten. Durch eine in der Düse 15 gleitbeweglich geführte Ventilnadel 28 kann der mit einer Innenbohrung 29 (vgl. auch Fig. 3) versehene Ansatz 19 verschlossen werden. Die Ventilnadel 28 ist starr mit einem Kolben 31 verbunden, der in einem Zylinderraum 32 der Düse 15 hinund herbeweglich ist. Über Anschlußnippel 33, 34 und (nicht dargestellte) Leitungen kann der einen oder anderen Kolbenseite ein Druckmittel, beispielsweise Druckluft zugeführt werden, so daß sich der Kolben 31 und mit ihm die Ventilnadel 28 entsprechend verschiebt und die Bohrung 29 im Ansatz 19 freigibt oder verschließt.

Über einen weiteren Anschlußnippel 35 und die (in Fig. 2 nicht dargestellten) Leitung 25 (siehe Fig. 1) kann der heißflüssige Polyurethan-Kleber der Düse 15 zugeleitet und in den die Ventilnadel 28 umgebenden Raum gebracht werden. Wenn die Ventilnadel aus der in Fig. 2 dargestellten Position zurückgezogen wird, kann der Kleber in den Ansatz 19 einfließen und von dort auf die gegenüberliegende Stirnseite 3 des Werkstücks 1 aufgebracht werden.

Die Querschnittsform des Ansatzes 19 ist in Fig. 3 dargestellt. Die der Stirnseite 3 des Werkstückes 1 gegenüberliegende Seite des Ansatzes 19 weist die bereits im Zusammenhang mit der ersten Düse 7 (Fig. 1) erwähnten Nuten 8 auf, in deren Nutgrund sich jeweils die Austrittsöffnungen 36 für den Kleber befinden. Der Kleber wird in Form von "Schnüren" auf die gegenüberliegende Randzone 13 an der Stirnseite 3 des Werkstückes 1 aufgetragen. Für die obenliegende Düse 14 gilt entsprechendes. Die Ausbildung der ersten Düse 7 mit Bezug auf die Nuten 8 und die Austrittsöffnungen 36 entspricht insoweit der Ausführungsform der Düsenansätze 18 und 19.

Beide Düsen 14, 15 sind durch Federbleche 37 zur Stirnseite 3 des Werkstückes 1 hin elastisch vorgespannt, wobei der Abstand der Ansätze 18, 19 von der Stirnseite 3 mit Hilfe einer an der Düse vorgesehenen Schraube 38 einstellbar ist, die an einem gestellfesten Anschlag 39 anliegt.

Beide Düsen 14, 15 werden von einem gemeinsamen Gestell 41 getragen. Eine Platte 42, von welcher die Federbleche 37 abstehen, ist mittels eines Gleitbolzens 43 vertikal gleitverschieblich. Eine Druckfeder 44 zwischen der Platte 42 und einem ortsfesten Gestellteil 45 drückt die Rolle 17 der Düse 15 an die Unterseite des Werkstücks 1. Eine Verdrehungssicherung in Gestalt eines am Gestellteil 45 befestigten Bolzens 46, der in eine entsprechende Öffnung der Platte 42 gleitverschieblich eingreift, hindert diese Platte 42 und damit die Düse 15 an einer Verdrehung.

## Ansprüche

1. Verfahren zum Verbinden von Umleimteilen mit den Stirnseiten plattenförmiger Werkstücke, bei dem die Stirnseite des Werkstückes und/oder der Umleimteil mit flüssigem Klebstoff beschichtet, Stirnseite und Umleimteil aneinander angelegt und miteinander verpreßt werden,
**dadurch gekennzeichnet,**
daß die Stirnseite des Werkstücks und/oder der Umleimteil lediglich in einem mittleren Bereich mit einem gegen Umgebungseinflüsse relativ wenig resistenten Schmelzkleber und die Randzonen beidseits des mittleren Bereichs mit einem gegen Umgebungseinflüsse relativ stärker resistenten Kleber beschichtet werden.

2. Verfahren nach Anspruch 1, dadurch gekennzeichnet, daß als wenig resistenter Kleber ein Schmelzkleber auf Polyäthylenvinylazetat-Basis und als stärker resistenter Kleber ein heißflüssiger Kleber auf Polyurethan-Basis verwendet werden.

3. Verfahren nach Anspruch 1, dadurch gekennzeichnet, daß die beiden verschiedenen Kleber gleichzeitig auf die Stirnseite des Werkstückes und/oder den Umleimteil aufgetragen werden.

4. Verfahren nach Anspruch 1, dadurch gekennzeichnet, daß die beiden verschiedenen Kleber nacheinander auf die Stirnseite des Werkstückes und/oder den Umleimteil aufgetragen werden.

5. Vorrichtung zur Durchführung des Verfahrens nach Anspruch 1 bis 4 mit einer ersten Düse zum Auftragen eines Schmelzklebers auf die Stirnseite des Werkstückes und/oder den Umleimteil,
**dadurch gekennzeichnet,**
daß die Auftragsbreite (a) und die Anordnung der ersten Düse (7) bezüglich der Stirnseite (3) des Werkstücks (1) und/oder des Umleimteils (2) derart ist, daß der Schmelzkleberauftrag lediglich in einem mittleren Bereich (11) der Stirnseite (3) des Werkstücks (1) oder des Umleimteils (2) erfolgt, und eine zweite und eine dritte Düse (14, 15) vorgesehen sind, die bezüglich des Werkstückes (1) und/oder Umleimteils (2) so ausgebildet und angeordnet sind, daß der Auftrag des relativ stärker resistenten Klebers nur in den Randzonen (12, 13) beidseits des mittleren Bereiches (11) erfolgt.

6. Vorrichtung nach Anspruch 5, dadurch gekennzeichnet, daß die zweite und dritte Düse (14, 15) durch Rollen (16, 17) am Werkstück (1) abgestützt sind.

7. Vorrichtung nach Anspruch 5, dadurch gekennzeichnet, daß die zweite und dritte Düse (14, 15) durch Federn (37, 44) zum Werkstück (1) hin vorgespannt sind.

8. Vorrichtung nach Anspruch 5, dadurch gekennzeichnet, daß die zweite und dritte Düse (14, 15) durch eine Ventilnadel (28) verschließbar sind.

9. Vorrichtung nach Anspruch 5, dadurch gekennzeichnet, daß die ersten, zweiten und/oder dritten Düsen (7, 14, 15) parallel zur Vorschubrichtung (B) des Werkstücks (1) verlaufende Nuten (8) mit Austrittsöffnungen (36) für Schmelzkleber bzw. stärker resistenten Kleber im Nutgrund aufweisen.

10. Vorrichtung nach Anspruch 5, dadurch gekennzeichnet, daß die Auftragsbreite (a) der ersten Düse (7) einstellbar und diejenige der zweiten und dritten Düsen (14, 15) konstant ist.

FIG. 1

0 292 813

**FIG. 2**

**FIG. 3**